# EUROPÄISCHE PATENTSCHRIFT

(11) **EP 1 712 398 B1**
(45) Veröffentlichungstag und Bekanntmachung des Hinweises auf die Patenterteilung: **12.11.2008**
(21) Anmeldenummer: 06014629.7
(22) Anmeldetag: 05.08.2004
(51) Int. Cl.: B60K 15/04

(54) **Einfüllstutzen für das Einfüllen von Kraftstoff in einen Fahrzeugtank**
Filler tube for the filling of fuel in a vehicle tank
Tubulure de remplissage pour le remplissage de combustible dans un réservoir d'un véhicule

(30) Priorität: 19.01.2004 DE 102004002994
(43) Veröffentlichungstag der Anmeldung: 18.10.2006
(62) Teilanmeldung aus: 04018518.3
(73) Patentinhaber: ITW-Automotive Products GmbH & Co. KG, 58636 Iserlohn (DE)
(72) Erfinder: Och, Roland, 97228 Rottendorf (DE)
(74) Vertreter: Hauck Patent- und Rechtsanwälte

(56) Entgegenhaltungen:
- DE-A1- 10 126 207
- DE-A1- 10 139 665
- FR-A- 2 761 934
- FR-A- 2 762 807

## Beschreibung

Die Erfindung bezieht sich auf einen Einfüllstutzen für das Einfüllen von Kraftstoff in einen Fahrzeugtank nach dem Patentanspruch 1.

Es ist bekannt, Zapfpistolen für Ottokraftstoff einerseits und Dieselkraftstoff andererseits mit einem unterschiedlichen Durchmesser zu versehen. Diese Maßnahme wurde eingeführt, nachdem bleifreier Ottokraftstoff von verbleitem Kraftstoff unterschieden werden mußte. Die Zapfpistolen für bleifreien Ottokraftstoff haben einen kleineren Außendurchmesser als die Zapfpistolen für verbleiten Kraftstoff und für Dieselkraftstoff. Eine Falschbetankung eines Dieselfahrzeugs mit Ottokraftstoff ist jedoch nicht ausgeschlossen, wenn nicht besondere Vorkehrungen hierfür getroffen werden. Aus DE 101 26 207 ist bekannt geworden, eine um eine Querachse verschwenkbare Klappe im Einführweg der Zapfpistole im geschlossenen Zustand zu verriegeln. Die Verriegelung wird gebildet von mehreren radial angeordneten, im Umfangsabstand angeordneten Lamellen, die einen konischen Einführabschnitt bilden. Wird eine Ottozapfpistole eingeführt, bleiben die Lamellen in ihrem Ruhezustand und die Zapfpistole stößt gegen die verriegelte Klappe. Die Dieselzapfpistole hingegen verstellt die Verriegelungslamellen radial und entriegelt dadurch die Klappe, so daß die Zapfpistole die Klappe öffnen kann. Eine Fehlbetankung durch Manipulation mit der Ottozapfpistole, durch welche die Verriegelung aufgehoben wird, ist nicht ausgeschlossen.

Aus DE 101 39 665 und DE 101 26 209 sind Einfüllstutzen für Dieselkraftstoff bekannt geworden, die so ausgeführt sind, daß beim Einführen einer Dieselzapfpistole ein Einfüllventil öffnet. Beim Einführen einer Ottozapfpistole wird hingegen das Ventil entweder nicht betätigt, so daß der Ottokraftstoff im vorderen Bereich des Einfüllstutzens verbleibt oder es erfolgt eine derartige starke Drosselung, daß sich die Zapfpistole automatisch abschaltet. Bekanntlich enthalten die Zapfpistolen einen Mechanismus, der das Ventil in der Zapfpistole sperrt, sobald sich ein gewisser Staudruck aufbaut. Dadurch wird in erster Linie vermieden, daß es zu einer Überfüllung des Tanks kommt.

Die bekannten Einfüllstutzen benötigen relativ viel Bauraum und sind relativ aufwendig. Außerdem sind sie nicht für sogenannte kappenlose Einfüllsysteme verwendbar. Hierunter versteht man Einfüllsysteme, die eine automatische Betankung ermöglichen. Der Einfüllstutzen ist nicht mehr von einer besonderen Kappe abgeschlossen, vielmehr kann die Zapfpistole ohne weiteres eingeführt werden. In diesem Zusammenhang ist aus FR 2761934 bekannt geworden, am Ende eines Einfüllstutzens eine Verschlußkappe vorzusehen. Sie öffnet nach innen und ist mit einer Dichtung versehen, die mit einer Dichtkante im Inneren des Stutzens zusammenwirkt. Beim Tanken wird die Klappe von der Zapf pistole gegen die Kraft einer Feder aufgeschwenkt. Die Klappe hat die Aufgabe zu verhindern, daß Verunreinigungen in den Tank gelangen. Das Öffnen der Klappe erfordert relativ viel Kraft, da die Feder verhindern muß, daß z. B. Spritzwasser unter Druck die Klappe ungewünscht öffnet.

Der Erfindung liegt die Aufgabe zugrunde, einen Einfüllstutzen für das Einfüllen von Kraftstoff in einen Fahrzeugtank zu schaffen, der wenig Bauraum und Bauteile benötigt, und geeignet ist, in Verbindung mit kappenlosen Einfüllsstemen verwendet zu werden und einen Schutz gegen das Eindringen von unerwünschten Medien in den Tank bietet.

Diese Aufgabe wird durch die Merkmale der Patentansprüche 1-10 gelöst.

Bei der Erfindung ist ein Betätigungsring vorgesehen, der aus federnd nachgiebigem Material besteht und/oder mittels einer Feder radial nach innen vorgespannt ist und über einen vorzugsweise achsparallelen Spalt geteilt ist. Der Betätigungsring weist einen sich konisch verengenden Einführabschnitt auf. Der Engquerschnitt des Einführabschnitts ist kleiner als der Querschnitt einer Zapfpistole. Der Betätigungsring weist an dem dem Tank zugekehrten Ende auf mindestens einer Seite des Spalts einen Betätigungsabschnitt auf. Der Betätigungsring ist in einem vorzugsweise topfförmigen Gehäuse schwimmend angeordnet, d.h. er kann sich seitlich begrenzt bewegen, wobei der Außendurchmesser des Betätigungsrings im entspannten Zustand kleiner ist als die Innenabmessungen des Gehäuses. Dem tankseitigen Ende des Betätigungsrings ist ein Verschlußmechanismus zugeordnet. Der Verschlußmechanismus hat ein bewegliches Verschlußselement, das den Duchgang im wesentlichen dicht abschließt.

Ein Getriebe, das notwendig ist, um die Bewegung des Betätigungsabschnitts des Betätigungsrings beim Einführen einer Zapfpistole in eine Öffnungsbewegung des Verschlußmechanismus zu übersetzen, kann bei der Erfindung denkbar einfach aufgebaut sein. Eine günstige Ausführungsform hierzu wird weiter unten noch erläutert. Da der Betätigungsring schwimmend gelagert ist, wird beim Einführen einer Zapfpistole mit kleinerem Außendurchmesser der Ring nicht aufgeweitet, sondern läßt die Zapfpistole ohne weiteres passieren. Der Verschlußmechanismus bleibt dann in der geschlossenen Stellung.

Der Verschlußmechanismus ist vorzugsweise derart ausgebildet, daß der Durchgang zum Tank weitgehend dicht verschlossen ist. Dadurch wirkt der erfindungsgemäße Einfüllstutzen als Schutz gegen Eindringen von Staub, Fremdkörpern, Schmutzwasser usw., wenn eine Verschlußkappe nicht vorgesehen ist.

In einer besonderen Ausgestaltung der Erfindung ist vorgesehen, daß der konische Einführabschnitt im Betätigungsring von radialen in Umfangsrichtung beabstandeten Rippen oder Lamellen gebildet ist. Die Rippen oder Lamellen verhindern ein Aufweiten des Betätigungsrings aufgrund z.B. von Spritzwasser unter Druck. Der Betätigungsring kann einteilig aus Kunststoff geformt werden, das ausreichende Federeigenschaften verkörpert. Alternativ oder zusätzlich kann eine Ringfeder den Betätigungsring umgeben, die den Betätigungsring radial nach innen vorspannt.

In einer weiteren Ausgestaltung der Erfindung ist vorgesehen, daß der Verschlußmechanismus eine Verschlußklappe aufweist, mit der ein seitlicher Arm verbunden ist, der um eine Achse schwenkbar gelagert ist und die annähernd parallel zur Achse des topfförmigen Gehäuses verläuft. Der Arm weist einen Schlitz auf, in den der erste Betätigungsabschnitt des Betätigungsrings eingreift, während ein zweiter Betätigungsabschnitt begrenzt beweglich in einer etwas größeren ortsfesten Ausnehmung angeordnet ist.

Nach einer anderen Ausgestaltung der Erfindung weisen die Bestätigungsabschnitte Zapfen auf, wobei ein Zapfen in einen Schlitz der Verschlußklappe eingreift und der andere Zapfen in ein Loch eines Lagerbauteils. Das die Verschlußklappe lagernde Lagerbauteil kann von einer ortsfest befestigten Lagerscheibe gebildet sein, das ein Durchgangsloch für die Tankbefüllung aufweist, das annähernd koaxial ist mit der Verschlußklappe in der geschlossenen Stellung. Die Lagerscheibe weist ferner einen bogenförmigen Schlitz auf, durch den ein Befestigungszapfen hindurchgeführt ist zum Eingriff in den Schlitz des Arms der Verschlußklappe.

Die erfindungsgemäße Ausbildung eines Einfüllstutzens für Kraftstoff ist für kappenlose Einfüllstutzen geeignet, weil zum einen ein Schutz für Fehlbedienung besteht und zum anderen durch die Verschlußklappe ein ausreichender Schutz gewährleistet ist gegen das Eindringen von Fremdkörpern, Verunreinigungen usw. in den Tank des Kraftfahrzeugs.

In einer anderen Ausgestaltung der Erfindung weist der Verschlußmechanismus eine Verschlußklappe auf, die um eine Achse quer zur Achse des Betätigungsrings schwenkbar gelagert ist. Sie ist vorzugsweise am Betätigungsring selbst gelagert, und dieser weist im Bereich des Spaltes einen Betätigungsabschnitt auf, der einen radialen Ansatz oder Vorsprung der Verschlußklappe übergreift, wenn diese in der Schließstellung ist. Eine Feder spannt die Verschlußklappe in diese Schließstellung vor. Bei dem Öffnen des Verschlußmechanismus über eine Zapfpistole muß zwar die Klappe ebenfalls gegen eine Federvorspannung aufgeschwenkt werden, die Federvorspannung kann jedoch sehr klein gehalten werden. Sie muß ausreichen, die Verschlußklappe in die Verschließstellung zu verstellen. Größeren Kräften, z.B. Spritzwasserdruck, muß sie nicht standhalten, weil die Klappe in der Schließstellung über den Betätigungsabschnitt des Betätigungsrings verriegelt ist.

Die Erfindung wird nachfolgend anhand von Zeichnungen näher erläutert.
- Fig. 1: zeigt perspektivisch den vorderen Teil eines Einfüllstutzens nach der Erfindung in der Ansicht von schräg oben.
- Fig. 2: zeigt die Explosionsdarstellung des Tankeinfüllstutzens nach Fig. 1.
- Fig. 3: zeigt den Teil 3 der Explosionsdarstellung nach Fig. 2.
- Fig. 4: zeigt perspektivisch einen Teil des erfindungsgemäßen Einfiillstutzens mit einer Verschlußklappe.
- Fig. 5: zeigt eine ähnliche Darstellung wie Fig. 4, jedoch zusätzlich die an die Darstellung nach Fig. 4 angebrachte Lagerscheibe.
- Fig. 6: zeigt die Ergänzung des Teils nach Fig. 5 mit einem Betätigungsring.
- Fig. 7: zeigt die Rückseite des Lagerrings nach Fig. 5 mit der Verschlußklappe.
- Fig. 8: zeigt perspektivisch die Draufsicht auf den Betätigungsring nach Fig. 6 in vergrößerter Darstellung mit der darunter liegenden Verschlußklappe.
- Fig. 9: zeigt die Seitenansicht des gesamten Einfüllstutzens nach der Erfindung.
- Fig. 10: zeigt perspektivisch einen Betätigungsring einer weiteren Ausführungsform nach der Erfindung.
- Fig. 11: zeigt die Druntersicht unter die Darstellung nach Fig. 10.
- Fig. 12: zeigt den Betätigungsring nach den Fig. 10 und 11 in Verbindung mit einem Gehäuseeinsatz.
- Fig. 13: zeigt perspektivisch ein äußeres topfförmiges Gehäuse, welches über die Anordnung nach Fig. 12 geschoben ist.
- Fig. 14: zeigt die Druntersicht unter die Darstellung nach Fig. 12.
- Fig. 15: zeigt die Druntersicht unter die Darstellung nach Fig. 13.

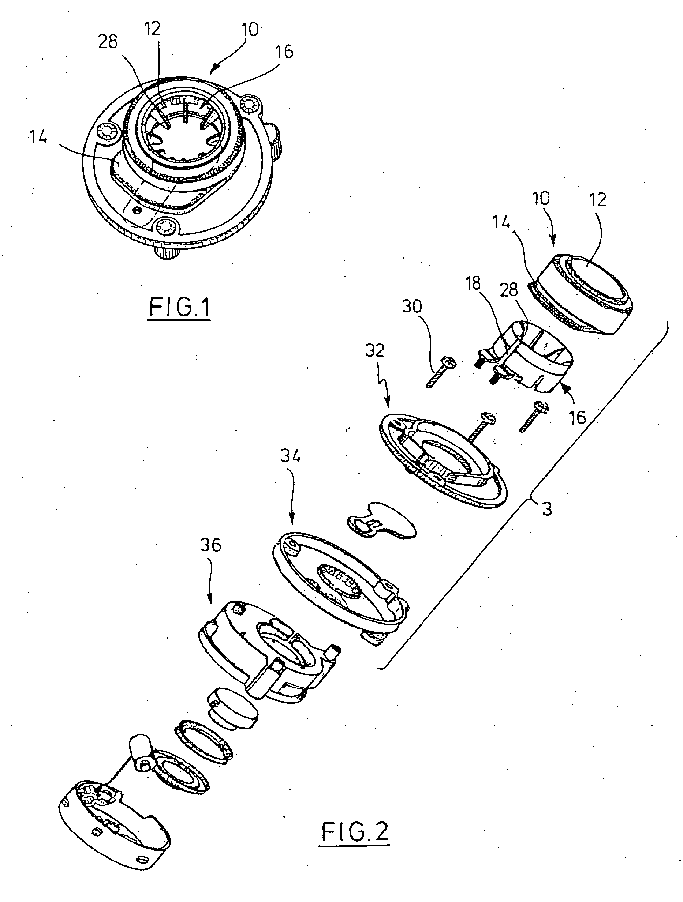

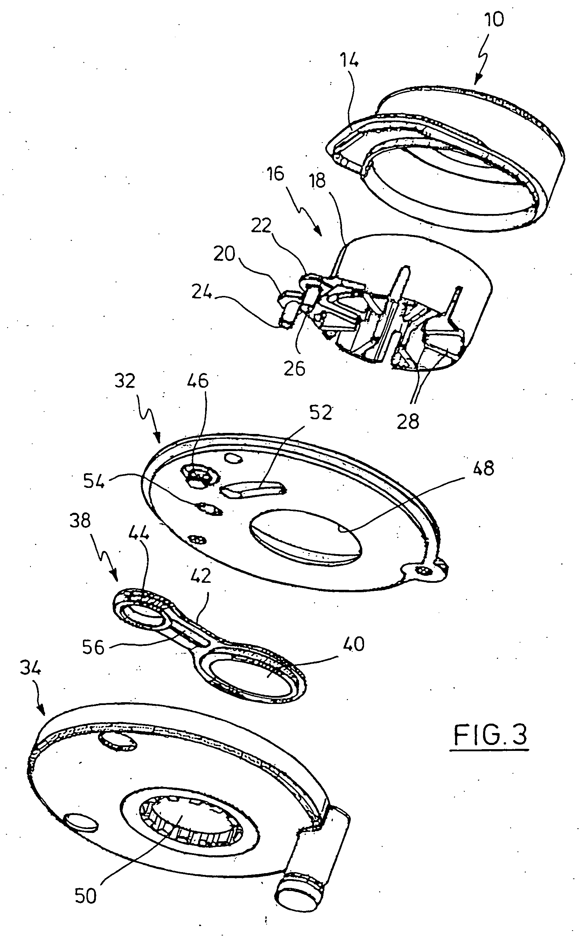

In den Fign. 2 und 3 ist ein topfförmiges Gehäuse 10 dargestellt mit einer Eingangsöffnung 12 an einem Ende und einem seitlichen Ansatz 14 am anderen Ende. Das andere Ende ist dem nicht gezeigten Tank eines Automobils zugekehrt. Unterhalb des topfförmigen Gehäuses 10 ist ein Betätigungsring 16 dargestellt, der bei 18 geteilt ist. Auf jeder Seite des Spaltes 18 ist in den Fign. 2 und 3 am unteren Ende jeweils ein Lappen 20 bzw. 22 angeformt, der annähernd radial absteht und der an der Unterseite jeweils einen Zapfen 24 bzw. 26 aufweist. Die Zapfen 24, 26 erstrecken sich achsparallel.

Im Inneren des Betätigungsrings sind mehrere radiale Rippen 28 vorgesehen, die in gleichmäßigen Umfangsabständen angeordnet sind. Die Rippen bilden einen Einführabschnitt, der sich von dem kappenförmigen Gehäuse 10 fort verengt. Der Betätigungsring 16 wird in das kappenförmige Gehäuse 10 eingesetzt. Im entspannten Zustand ist der Außendurchmesser des Betätigungsrings 16 deutlich kleiner als der Innendurchmesser des topfförmigen Gehäuses 10.

Mit Hilfe von drei Schrauben 30 wird ein Lagerring 32 mit einem Gegenring 34 verschraubt, zugleich erfolgt eine Verschraubung mit einem Gehäuse 36, das ein nicht gezeigtes kappenloses Einfüllsystem beinhaltet, auf das im einzelnen nicht eingegangen werden soll. Ein solches System wurde weiter oben bereits durch Bezugnahme auf eine französische Druckschrift erläutert. Es erlaubt das Einführen einer Zapfpistole durch Öffnen einer Verschlußklappe auf automatischem Wege, indem die Zapfpistole die Verschlußklappe öffnet und den Weg für den Kraftstoff freigibt. Dieser Teil ist in Fig. 2 links von der Gruppe 3 gezeigt. Er soll jedoch im einzelnen nicht beschrieben werden.

Durch die Verbindung der Scheiben 32, 34 mit dem Gehäuse 36 sind auch diese Teile ortsfest in geeigneter Weise an der Karosserie des Automobils angebracht, was im einzelnen nicht dargestellt ist. Zwischen den Scheiben 32, 34 ist eine Verschlußklappe 38 dargestellt. Sie weist eine annähernd kreisrunde Verschlußplatte 40 auf, einen radialen Arm 42 und ein Lagerauge 44. Das Lagerauge wirkt mit einem achsparallelen Stift 46 auf der der Verschlußklappe 38 zugekehrten Seite der Lagerscheibe 32 zusammen. Die Lagerscheibe hat ein Durchgangsloch 48, das mit der Öffnung 12 annähernd axial ausgerichtet ist und ebenfalls koaxial ist zu einer Öffnung 50 in der Scheibe 34.

In der Lagerscheibe 32 ist ein bogenförmiger Schlitz 52 geformt, durch den hindurch sich der Zapfen 26 erstreckt. Ein annähernd radiales Langloch 54 nimmt den zweiten Zapfen 24 auf. Der Zapfen 26 greift in einen radialen länglichen Schlitz 56 des Arms 42.

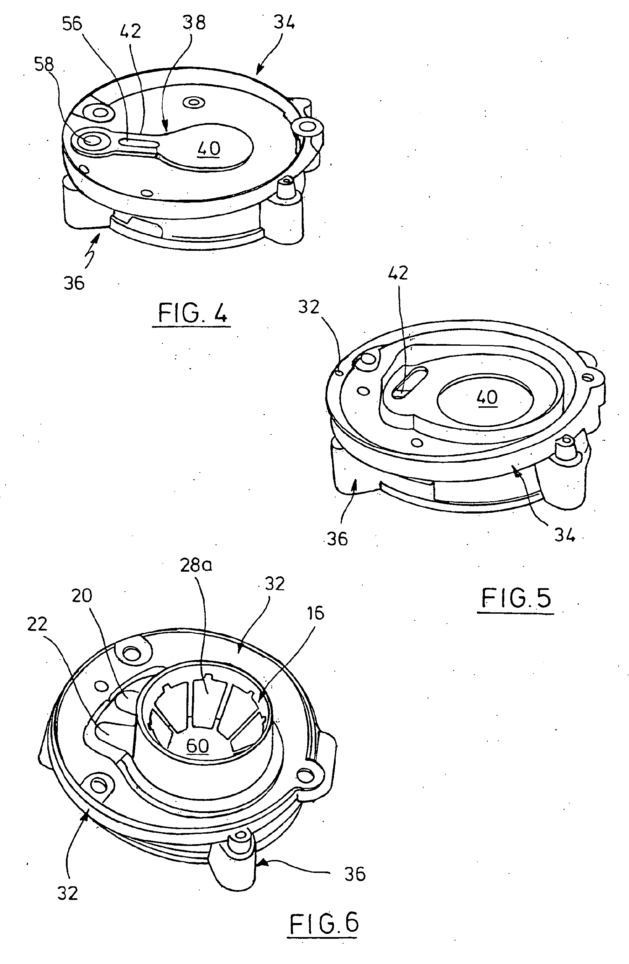

In Fig. 4 erkennt man die Scheibe 34, die mit dem Gehäuse 36 durch die Schraubverbindung (nicht gezeigt) verbindbar ist. Außerdem erkennt man die Verschlußplatte 40, welche den Durchgang 50 (Fig. 3) verschließt, wobei das Lagerauge 44 mit einem achsparallelen Zapfen 58 der Scheibe 34 zusammenwirkt. Der Zapfen 58 ist hohl zur Aufnahme des Zapfens 46 der Lagerscheibe 32.

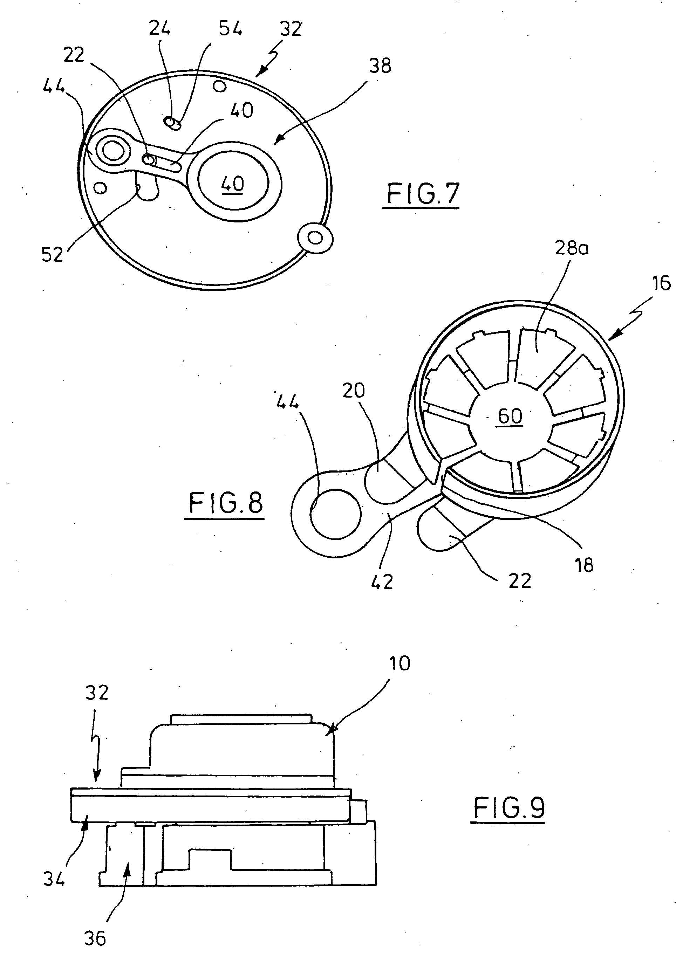

In Fig. 5 ist gezeigt, wie mit der Scheibe 34 und der Verschlußklappe 38 die Lagerscheibe 32 zusammengesetzt ist. In Fig. 6 ist gezeigt, wie zusätzlich der Betätigungsring 16 auf die Lagerscheibe 32 gesetzt ist. Im Unterschied zur Darstellung nach den Fign. 1 bis 3 weist der Betätigungsring 16 keine Rippen, sondem sektorförmige Lamellen 28a auf, die zusammen einen sich zum Tank hin verjüngenden Einführabschnitt bilden. Dies ist etwas deutlicher in Fig. 8 herausgestellt. Der Engquerschnitt ist mit 60 angegeben. Der Durchmesser des Engquerschnitts ist geringfügig kleiner als der Durchmesser für eine Zapf pistole. Wird daher eine Zapfpistole in den Betätigungsring eingeführt, muß er den Betätigungsring 16 aufweiten, um weiter vorgetrieben zu werden. Dadurch vergrößert sich der Spalt 18 und die Lappen 20, 22 werden auseinander bewegt.

In Fig. 7 ist die dem Tank zugekehrte Seite der Lagerscheibe 32 mit der Verschlußklappe 38 dargestellt. Man erkennt, wie der Betätigungszapfen 26 sich durch den bogenförmigen Schlitz 52 der Lagerscheibe 32 erstreckt in Eingriff mit dem Schlitz 56. Der zweite Zapfen 24 befindet sich im langgestreckten Schlitz 54. Ein Auseinanderbewegen der Zapfen 24, 26 führt daher zu einem Schwenken der Verschlußklappe 38 in Uhrzeigerrichtung, wodurch das Durchgangsloch 48 der Lagerscheibe 32 geöffnet wird. Dadurch kann die Zapfpistole weiter vorgefiihrt werden in Richtung Tank zur Betätigung des Einfüllsystems, das sich im Gehäuse 36 befindet.

Wie schon erwähnt, sind die Teile 32, 34 und Gehäuse 36 über die Schrauben 30 miteinander verschraubt. Die Anbringung des Gehäuses 36 an der Karosserie ist im einzelnen nicht dargestellt. Die Anbringung des topfförmigen Gehäuses 10, welches den Betätigungsring 16 aufnimmt an der Lagerscheibe 32, ist nicht dargestellt. Hier kann ebenfalls eine Schraubbefestigung, eine Klebung oder dergleichen vorgenommen werden.

Wie der Betätigungsring 16, können auch die übrigen Teile des dargestellten Einfüllstutzens aus einem geeigneten Kunststoffinaterial hergestellt werden.

Wird eine Anordnung gemäß Teil 3 in Fig. 2 ohne das weitere System verwendet, bildet es einen Einfüllstutzen mit Kappe (nicht dargestellt), der einen Schutz für Dieselmotoren durch Fehlbetankung mit Ottokraftstoff bildet. Wird hingegen das komplette System von Fig. 2 verwendet, ist ein kappenloser Einfüllstutzen verwirklicht, ohne daß ein Schutz gegen Fehlbetankung erforderlich ist, z. B. bei seiner Verwendung für Ottomotoren.

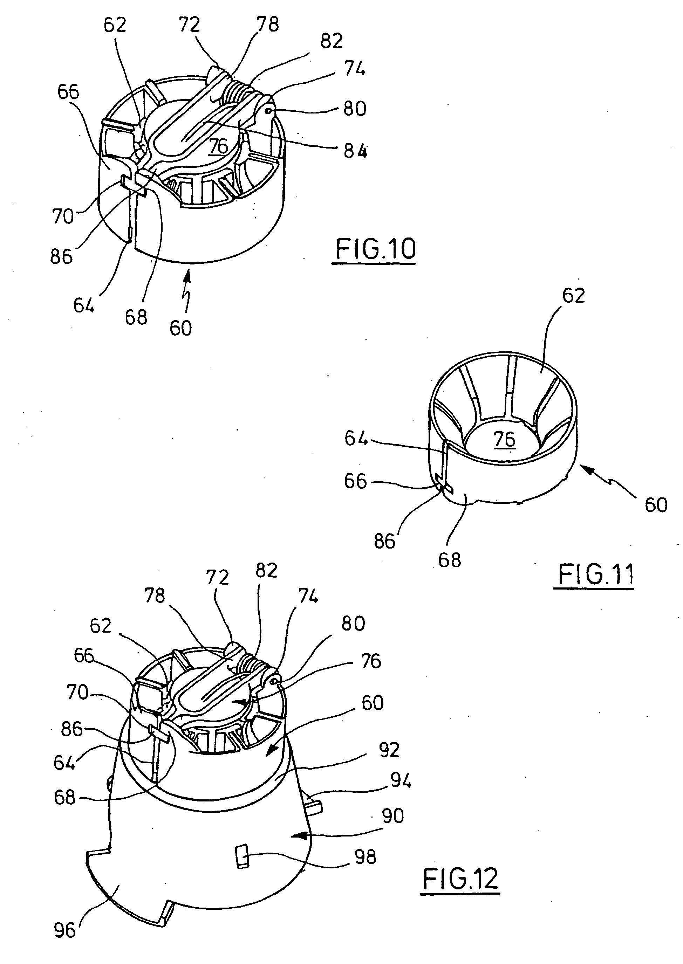

In den Fign. 10 bis 15 ist eine andere Ausführungsform eines Einfüllstutzen für das Einfüllen von Kraftstoff dargestellt. In den Fign. 10 und 11 ist ein Betätigungsring 60 zu erkennen, der ähnlich aufgebaut ist wie der Betätigungsring 16 nach den voranstehenden Figuren. Er weist an der Innenseite eine Reihe von durch einen Schlitz beabstandeten Lamellen 62 auf, die einen sich in Fig. 11 von oben nach unten verjüngenden Eintrittsabschnitt für eine nicht gezeigte Kraftstoffpistole bilden. Der Betätigungsring 60 ist durch einen achsparallelen Spalt 64 geteilt, und auf jeder Seite des Spalts 64 weist der Ring achsparallele Ansätze 66, 68 auf, die gegenüberliegende Einschnitte aufweisen. In Fig. 10 ist ein Einschnitt mit 70 bezeichnet.

Auf der dem Spalt 64 gegenüberliegenden Seite weist der Betätigungsring 60 zwei im Umfangsabstand angeordnete Lageransätze 72, 74 auf. Eine Verschlußklappe 76 ist mit einem gabelförmigen radialen Ansatz 76 versehen, der mit Hilfe eines Lagerstiftes 80 in den Lageransätzen 72, 74 schwenkbar gelagert ist. Innerhalb des gabelförmigen Ansatzes 78 befindet sich eine Schraubenfeder 82 mit einem verlängerten Schenkel 84 an einem Ende, der gegen die Oberseite der Verschlußklappe 76 anliegt. Dadurch wird die Verschlußklappe 76 in die Schließstellung vorgespannt.

Gegenüber dem gabelförmigen Ansatz 78 ist ein radialer Vorsprung 86 an der Verschlußklappe 76 geformt. Er greift seitlich in die gegenüberliegenden Einschnitte 70 der Ansätze 66, 68. Dadurch ist die Verschlußklappe 76 in der in Fig. 10 gezeigten Schließstellung verriegelt.

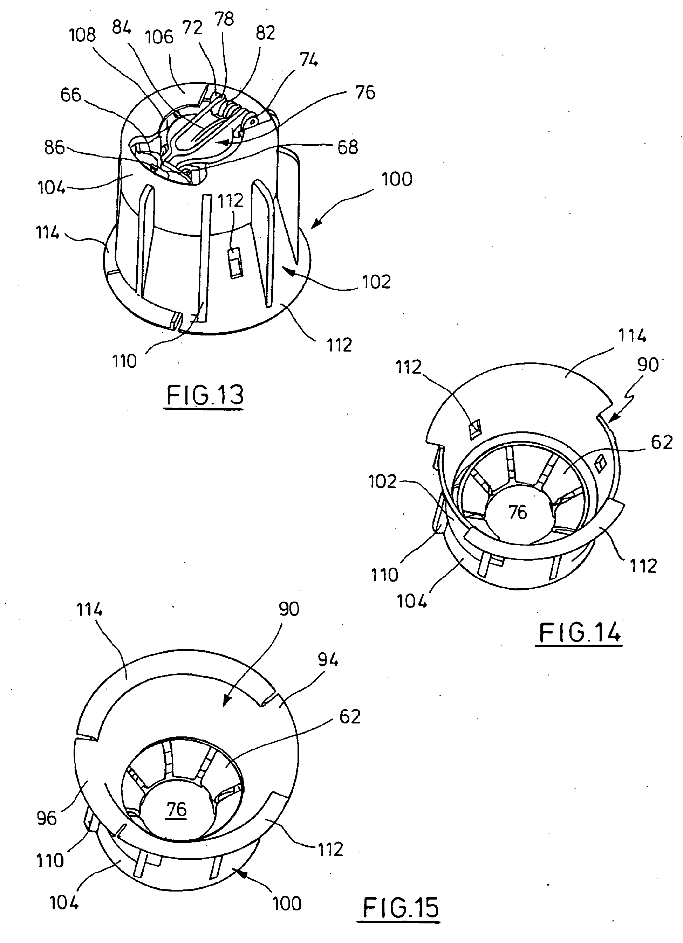

In Fig. 12 ist ein konischer Ringkörper oder Einsatz 90 dargestellt, der sich in Fig. 12 von oben nach unten erweitert. Der Betätigungsring 60 ist auf die nach oben weisende Stirnseite 92 aufgestellt. Am gegenüberliegenden Ende weist der konische Einsatz 90 zwei radiale Flansche 94, 96 auf. Außerdem weist der konische Einsatz 90 an seiner Außenseite in Abständen Verriegelungsnasen 98 auf. In Fig. 13 ist ein topfförmiges Gehäuse 100 dargestellt, das einen unteren konischen Gehäuseteil 102 und einen sich daran oben anschließenden zylindrischen Gehäuseteil 104 aufweist. Das Gehäuseteil 104 ist mit einem Boden 106 versehen, der eine Durchbrechung 108 aufweist, durch welche der Betätigungsring 60 mit Verschlußklappe 76 zu erkennen ist. Das topfförmige Gehäuse 100 ist außen in Umfangsabständen mit Verstärkungsrippen 110 versehen und am unteren Ende mit zwei diametral gegenüberliegenden Flanschen 112, 114 am in Fig. 13 unteren Ende geformt. Im konischen Gehäuseteil 102 sind außerdem Verriegelungsöffnungen 112 zu erkennen.

Der Betätigungsring 60 wird von innen gegen den Boden 106 des Gehäuses 100 gestellt, wie in Fig. 14 zu erkennen, wobei zwischen der Außenseite des Ringes 60 und der Innenseite des Gehäuseteils 104 Platz ist, so daß sich der Betätigungsring begrenzt frei seitlich innerhalb des Gehäuseteils 104 bewegen kann. Bei der Montage wird anschließend der konische Einsatz 90 in das Gehäuse 100 eingesetzt, wobei die Außenabmessungen des konischen Einsatzes 90 annähernd den Innenabmessungen des Gehäuseteils 102 entsprechen und die Verriegelungsnasen 98 in die Verriegelungsöffnungen 112 eingreifen, wie dies in Fig. 13 dargestellt ist. Wie in Fig. 15 zu erkennen, greifen die Flansche 94, 96 des konischen Einsatzes 90 in die Lücken der Flansche 112, 114 annähernd passend ein, so daß ein vollständiger Kreis entsteht. Der Einsatz 90 ist somit im Gehäuse 100 festgelegt und sichert seinerseits axial den Betätigungsring 60 im Gehäuse 100. Der Betätigungsring kann, wie erwähnt, sich jedoch radial begrenzt bewegen.

Wird eine im Durchmesser größere Zapfpistole eingeführt, wird der Betätigungsring 60 aufgeweitet, und zwar so weit, daß die in den Figuren dargestellte Schließstellung der Verschlußklappe 76 verlassen werden kann, indem mit Hilfe der Zapfpistole die Verschlußklappe 76 aufgeschwenkt wird. Nunmehr kann der Einfüllvorgang beginnen. Wird die Zapfpistole wieder herausgezogen, gelangt die Klappe augenblicklich in die in den Figuren dargestellte Schließstellung zurück, und der Betätigungsring 60 zieht sich wieder zusammen, um die Verschlußklappe 76 wieder in der Verschließstellung zu verriegeln.

## Patentansprüche

1. Einfüllstutzen für das Einfüllen von Kraftstoff in einen Fahrzeugtank mittels Zapfpistole enthaltend:
- einen geschlitzten Betätigungsring (16) aus federndem Material oder mit einem Federmittel für eine radiale Vorspannung mit einem Spalt (18), der einen Einführabschnitt aufweist, der sich in Richtung des Fahrzeugtanks konisch verengt, wobei der Engquerschnitt (60) kleiner ist als der Querschnitt einer Zapfpistole,
- wobei der Betätigungsring (16) an dem dem Tank zugekehrten Ende auf mindestens einer Seite des Spalts (18) einen Betätigungsabschnitt (24, 26) aufweist,
- wobei der Betätigungsring (16) in einem Gehäuse (10) schwimmend angeordnet und sein Außendurchmesser (16) im entspannten Zustand kleiner ist als die Innenabmessungen des Gehäuses (10)
- einen Verschlußmechanismus, der dem tankseitigen Ende des Betätigungsrings (16) zugeordnet und mit einem beweglich gelagerten Verschlußelement (38) annähernd dicht den Durchgang zum Tank abschließt und
- ein Getriebe zwischen dem Betätigungsabschnitt (24, 26) des Betätigungsrings (16) und dem Verschlußmechanismus, das die Bewegung des Betätigungsabschnitts (24, 26) in eine Bewegung des Verschlußelements (38) übersetzt, wodurch das Verschlußelement (38) aus der geschlossenen in die geöffnete Stellung bewegt wird, wenn durch die Zapfpistole der Betätigungsring (16) aufgeweitet und der Betätigungsabschnitt (24, 26) verstellt wird.

2. Einfüllstutzen nach Anspruch 1, **dadurch gekennzeichnet, daß** der konische Einführabschnitt des Betätigungsrings von radialen in Umfangsabstand beabstandeten Rippen (28) oder Lamellen (28a) gebildet ist.

3. Einfüllstutzen nach Anspruch 1 oder 2, **dadurch** gekenntzeichnet, daß der Verschlußmechanismus eine Verschlußklappe (38) aufweist mit einem seitlichen Arm (42), der um eine Achse schwenkbar gelagert ist, die parallel zur Achse eines topfförmigen Gehäuses (10) verläuft und der Arm (42) einen Schlitz (56) aufweist, in den der Betätigungsabschnitt des Betätigungsrings (16) eingreift, während ein zweiter Betätigungsabschnitt annähernd ortsfest angeordnet ist.

4. Einfüllstutzen nach Anspruch 3, **dadurch gekennzeichnet, daß** die Betätigungsabschnitte Zapfen (24, 26) aufweisen, wobei ein Zapfen (26) in einen Schlitz (56) der Verschlußklappe (38) eingreift und der andere Zapfen in ein Loch (54) eines Lagerbauteils eingreift, das die Verschlußklappe (38) lagert, wobei das Loch eine begrenzte Bewegung des anderen Zapfens erlaubt.

5. Einfüllstutzen nach Anspruch 4, **dadurch gekennzeichnet, daß** das Lagerbauteil eine ortsfest befestigte Lagerscheibe (32) ist, die ein Durchgangsloch (48) aufweist und die zwischen der Verschlußklappe (38) und dem Betätigungsring (16) angeordnet ist und die Lagerscheibe (32) einen bogenförmigen Schlitz (52) aufweist, durch den hindurch der eine Befestigungszapfen (26) geführt ist in Eingriff mit dem Schlitz (52) des Arms der Verschlußklappe (38).

6. Einfüllstutzen nach Anspruch 4 und 5, **dadurch gekennzeichnet, daß** das Loch (54) ebenfalls länglich ist und annähernd radial verläuft.

7. Einfüllstutzen nach einem der Ansprüche 1 oder 2, **dadurch gekennzeichnet, daß** der Verschlußmechanismus eine Verschlußklappe (76) aufweist, die um eine Achse quer zur Achse des Betätigungsrings (60) schwenkbar am Gehäuse gelagert und von einer Feder (82) in Schließrichtung vorgespannt ist, die Verschlußklappe (76) einen seitlichen Vorsprung (86) aufweist, mindestens ein Betätigungsabschnitt (66, 68) des Betätigungsrings (60) so ausgebildet ist, daß er den Vorsprung (86) übergreift, wenn die Verschlußklappe (76) in ihrer Schließstellung ist und der Betätigungsabschnitt (66, 68) den Vorsprung (86) freigibt, wenn der Betätigungsring (60) von der Zapfpistole ausgeweitet wird.

8. Einfüllstutzen nach Anspruch 7, **dadurch gekennzeichnet, daß** die Verschlußklappe (76) auf der dem Spalt (64) gegenüberliegenden Seite am Betätigungsring (60) gelagert ist.

9. Einfüllstutzen nach einem der Ansprüche 1 bis 8, **dadurch gekennzeichnet, daß** ein topfförmiges Gehäuse (100) vorgesehen ist, dessen Boden (106) einen Durchgang (66) aufweist, der vom Verschlußmechanismus in seiner Schließstellung verschlossen ist, der Betätigungsring (60) am Boden (106) des topfförmigen Gehäuses (100) anliegt, ein ringförmiger Einsatz (90) vorgesehen ist, der in das topfförmige Gehäuse (100) annähernd passend eingesetzt und daran befestigbar ist, wobei das innere Ende des ringförmigen Einsatzes (90) gegen die zugekehrte Stirnseite des Betätigungsrings (60) zur Anlage kommt.

10. Einfüllstutzen nach Anspruch 9, **dadurch gekennzeichnet, daß** das topfförmige Gehäuse (100) und der ringförmige Einsatz (90) aus Kunststoff geformt sind, der ringförmige Einsatz (90) außen Verriegelungsvorsprünge (98) aufweist, die mit komplementären Verriegelungsöffnungen (112) des topfförmigen Gehäuses (100) zusammenwirken, um den ringförmigen Einsatz (90) im topfförmigen Gehäuse (100) festzulegen.

## Claims

1. Filler neck for filling a vehicle tank with fuel by means of a filler nozzle comprising:
- a slotted actuating ring (16) of resilient material or with a spring means for radial pretensioning with a gap (18), which comprises an insertion portion, which tapers conically in the direction of the vehicle tank, wherein the narrow cross section (60) is smaller than the cross section of a filler nozzle,
- wherein at the end facing the tank, the actuating ring (16) comprises an actuating portion (24, 26) on at least one side of the gap (18),
- wherein the actuating ring (16) is arranged floatingly in a housing (10) and its external diameter (16) is smaller in the relaxed position than the internal dimensions of the housing (10)
- a closing mechanism which is assigned to the tank-side end of the actuating ring (16) and which provides virtually sealing closure of the passageway to the tank by means of a movably mounted closing element (38) and
- a gearing between the actuating portion (24, 26) of the actuating ring (16) and the closing mechanism, which gearing transforms the movement of the actuating portion (24, 26) into a movement of the closing element (38), whereby the closing element (38) is moved from the closed into the open position, if the actuating ring (16) is widened by the filler nozzle and the actuating portion (24, 26) is displaced.

2. Filler neck according to Claim 1, **characterized in that** the conical insertion portion of the actuating ring is formed of radial ribs (28) or blades (28a) spaced around the circumference.

3. Filler neck according to Claim 1 or 2, **characterized in that** the closing mechanism comprises a closing flap (38) with a lateral arm (42), which is mounted so as to be swivellable about an axis which extends parallel to the axis of a cup-shaped housing (10), and the arm (42) comprises a slot (56), in which the actuating portion of the actuating ring (16) engages, while a second actuating portion is arranged in a virtually immobile manner.

4. Filler neck according to Claim 3, **characterized in that** the actuating portions comprise pegs (24, 26), wherein one peg (26) engages in a slot (56) in the closing flap (38) and the other peg engages in a hole in a mounting component, which mounts the closing flap (38), wherein the hole allows limited movement of the other peg.

5. Filler neck according to Claim 4, **characterized in that** the mounting component is a mounting ring (32) attached in an immobile manner, which mounting ring (32) comprises a passage hole (48) and which is arranged between the closing flap (38) and the actuating ring (16), and the mounting ring (32) comprises an arcuate slot (52), through which the one fastening peg (26) is guided in engagement with the slot (52) in the arm of the closing flap (38).

6. Filler neck according to Claim 4 and Claim 5, **characterized in that** the hole (54) is also elongate and extends approximately radially.

7. Filler neck according to one of Claims 1 and 2, **characterized in that** the closing mechanism comprises a closing flap (76), which is mounted swivellably on the housing about an axis perpendicular to the axis of the actuating ring (60) and is pretensioned by a spring (82) in the closing direction, the closing flap (76) comprises a lateral projection (86), at least one actuating portion (66, 68) of the actuating ring (60) is so constructed that it overlaps the projection (86) if the closing flap (76) is in its closed position and the actuating portion (66, 68) releases the projection (86) if the actuating ring (60) is widened by the filler nozzle.

8. Filler neck according to Claim 7, **characterized in that** the closing flap (76) is mounted on the actuating ring (60) on the opposite side from the gap (64).

9. Filler neck according to one of Claims 1 to 8, **characterized in that** a cup-shaped housing (100) is provided, the base (106) of which comprises a passage (66), which is closed by the closing mechanism in the closed position thereof, the actuating ring (60) rests against the base (106) of the cup-shaped housing (100), an annular insert (90) is provided, which is inserted with an approximate fit into the cup-shaped housing (100) and may be fastened thereto, wherein the inner end of the annular insert (90) comes to rest against the end face facing it of the actuating ring (60).

10. Filler neck according to Claim 9, **characterized in that** the cup-shaped housing (100) and the annular insert (90) are moulded from plastics material, the annular insert (90) comprises latching projections (98) on the outside, which interact with complementary latching openings (112) in the cup-shaped housing (100), in order to fix the annular insert (90) in the cup-shaped housing (100).

## Revendications

1. Tubulure de remplissage pour remplir de carburant le réservoir d'un véhicule au moyen d'un pistolet de distribution de carburant comprenant :
- une bague fendue d'actionnement (16) en un matériau élastique ou dotée d'un moyen élastique qui permet une précontrainte radiale, dotée d'une fente (18) qui présente une partie d'insertion qui se rétrécit coniquement en direction du réservoir du véhicule, la coupe transversale étroite (60) étant plus petite que la coupe transversale d'un pistolet de distribution de carburant,
- à son extrémité tournée vers le réservoir et sur au moins un côté de la fente (18), la bague d'actionnement (16) présentant une partie d'actionnement (24, 26),
- la bague d'actionnement (16) étant disposée de manière à pouvoir flotter dans un boîtier (10) et son diamètre extérieur (16) à l'état détendu étant plus petit que les dimensions intérieures du boîtier (10)
- un mécanisme de fermeture associé à l'extrémité de la bague d'actionnement (16) située du côté du réservoir et fermant de manière sensiblement étanche le passage vers le réservoir par un élément de fermeture (38) monté de manière à pouvoir se déplacer et
- une transmission entre la partie d'actionnement (24, 26) de la bague d'actionnement (16) et le mécanisme de fermeture, qui convertit le mouvement de la partie d'actionnement (24, 26) en un mouvement de l'élément de fermeture (38), de sorte que le mécanisme de fermeture (38) soit déplacé de la position de fermeture jusque dans la position d'ouverture lorsque la bague d'actionnement (16) a été évasée par le pistolet de distribution de carburant et que la partie d'actionnement (24, 26) a été déplacée.

2. Tubulure de remplissage selon la revendication 1, **caractérisée en ce que** la partie conique d'insertion de la bague d'actionnement est formée par des nervures (28) ou des lamelles (28a) radiales situées à distance sur la périphérie.

3. Tubulure de remplissage selon la revendication 1 ou 2, **caractérisée en ce que** le mécanisme de fermeture présente un clapet de fermeture (38) doté d'un bras latéral (42) monté à pivotement autour d'un axe qui s'étend parallèlement à l'axe d'un boîtier (10) en forme de chapeau, le bras (42) présentant une fente (56) dans laquelle la partie d'actionnement de la bague d'actionnement (16) s'engage, tandis qu'une deuxième partie d'actionnement est disposée en position sensiblement fixe.

4. Tubulure de remplissage selon la revendication 3, **caractérisée en ce que** les parties d'actionnement présentent des tourillons (24, 26), un tourillon (26) s'engageant dans une fente (56) du clapet de fermeture (38) et l'autre tourillon s'engageant dans un trou (54) d'un composant de palier qui supporte le clapet de fermeture (38), le trou permettant un déplacement limité de l'autre tourillon.

5. Tubulure de remplissage selon la revendication 4, **caractérisée en ce que** le composant de palier est une bague de palier (32) immobilisée en une position fixe, traversée par un trou (48) et disposée entre le clapet de fermeture (38) et la bague d'actionnement (16), la bague de palier (32) présentant une fente (52) en forme d'arc de cercle par laquelle l'un des tourillons de fixation (26) passe pour s'engager dans la fente (52) du bras du clapet de fermeture (38).

6. Tourillon de remplissage selon les revendications 4 et 5, **caractérisé en ce que** le trou (54) est également allongé et s'étend en direction sensiblement radiale.

7. Tubulure de remplissage selon l'une des revendications 1 et 2, **caractérisée en ce que** le mécanisme de fermeture présente un clapet de fermeture (76) monté sur le boîtier de manière à pouvoir pivoter autour d'un axe transversal par rapport à l'axe de la bague d'actionnement (60) et est précontraint en direction de la fermeture par un ressort (82), le clapet de fermeture (76) présentant une saillie latérale (86), au moins une partie d'actionnement (66, 68) de la bague d'actionnement (60) étant configurée de telle sorte qu'elle chevauche la saillie (86) lorsque le clapet de fermeture (76) se trouve dans sa position de fermeture et que la partie d'actionnement (66, 68) libère la saillie (86) lorsque la bague d'actionnement (60) est évasée par le pistolet de distribution.

8. Tubulure de remplissage selon la revendication 7, **caractérisée en ce que** le clapet de fermeture (76) est monté sur le côté de la bague d'actionnement (60) opposé à la fente (64).

9. Tubulure de remplissage selon l'une des revendications 1 à 8, **caractérisée en ce qu'**elle présente un boîtier (100) en forme de chapeau dont le fond (106) présente un passage (66) fermé par le mécanisme de fermeture lorsque ce dernier se trouve en position de fermeture, **en ce que** la bague d'actionnement (60) repose contre le fond (106) du boîtier (100) en forme de chapeau, **en ce qu'**elle présente une garniture annulaire (90) qui est insérée de manière sensiblement ajustée dans le boîtier (100) en forme de chapeau et peut y être fixée, l'extrémité intérieure de la garniture, annulaire (90) venant se placer contre le côté frontal de la bague d'actionnement (60) tourné vers elle.

10. Tubulure de remplissage selon la revendication 9, **caractérisée en ce que** le boîtier (100) en forme de chapeau et la garniture annulaire (90) sont réalisés en matière synthétique, **en ce que** la garniture annulaire (90) présente à l'extérieur des saillies de verrouillage (98) qui coopèrent avec des ouvertures complémentaires de verrouillage (112) du boîtier (100) en forme de chapeau pour immobiliser la garniture de forme annulaire (90) dans le boîtier (100) en forme de chapeau.
